# EUROPÄISCHE PATENTSCHRIFT

(11) **EP 3 924 234 B1**
(45) Veröffentlichungstag und Bekanntmachung des Hinweises auf die Patenterteilung: **25.09.2024**
(21) Anmeldenummer: 19714344.9
(22) Anmeldetag: 21.03.2019
(51) Int. Cl.: B60T 13/66, B60T 8/40, B60T 7/04

(54) **PACKAGING FÜR EIN BREMSSYSTEM**
PACKAGING FOR A BRAKE SYSTEM
BOÎTIER POUR UN SYSTÈME DE FREINAGE

(30) Priorität: 12.02.2019 DE 202019101586 U
(43) Veröffentlichungstag der Anmeldung: 22.12.2021
(60) Teilanmeldung: 24194386.9
(73) Patentinhaber: IPGATE AG, 8808 Pfäffikon SZ (CH)
(72) Erfinder: LEIBER, Thomas, 22203 Rogoznica (HR); LEIBER, Heinz, 71739 Oberriexingen (DE)
(74) Vertreter: Peterreins Schley
(86) Internationale Anmeldenummer: PCT/EP2019/057123
(87) Internationale Veröffentlichungsnummer: WO 2020/164748

(56) Entgegenhaltungen:
- EP-A1- 2 881 292
- EP-A1- 2 883 766
- EP-A1- 3 225 480
- EP-A1- 3 225 481
- DE-A1- 102012 213 216
- DE-A1- 102015 104 246
- DE-T5- 112013 004 634
- DE-T5- 112015 002 162

## Beschreibung

Die vorliegende Erfindung betrifft ein Betätigungssystem mit den Merkmalen des Anspruch 1.

### Stand der Technik

Das Packaging oder Bauvolumen von Bremssystemen ist von großer Bedeutung. Insbesondere bei Systemen mit HAD (halbautomatisiertem) und FAD (vollautomatisiertem Fahren) sind viele Varianten von Level 2 mit Tandemhauptzylinder (THZ) oder Single-Hauptzylinder (HZ) bis Level 5 ohne THZ oder HZ zu berücksichtigen. Insbesondere sind 3 - 5 Konzepte mit 2 Druckversorgungen bzw. Druckversorgungseinrichtungen (DV) im Packaging schwierig mit kleinem Bauvolumen zu realisieren. Beispiele für Packaging sind aus EP 2744691 mit senkrechter Anordnung der Druckversorgung (DV) zur HZ-Achse und DE 20160321161604 mit paralleler Anordnung der Druckversorgungseinrichtung zur HZ-Achse bekannt, welche eine geringere Baubreite erfordern. Redundante Druckversorgungen ermöglichen Systeme mit nur einem Hauptbremszylinder, da die Ausfallwahrscheinlichkeit von zwei Druckversorgungseinrichtungen sehr gering ist und sich praktisch auf den Ausfall des Bordnetzes beschränkt. Ein solches System ist in DE 102017222450 beschrieben. Der Hauptbremszylinder HZ ermöglicht hier noch ein Notfahren mit Bremse z.B. zum Abschleppfahrzeug.

Aus DE102016105232 A1 ist ein Packaging mit kleinem Bauvolumen vorbekannt, bei dem eine integrierte redundante Druckversorgung bestehend aus mindestens einer Druckversorgungseinrichtung, mit Ventilen, insbesondere Magnetventilen zusammengefasst in einer Hydraulikunit, mit mindestens einer elektronischen Steuer- und Regeleinheit, mindestens einem Vorratsbehälter, und einem Hauptbremszylinder in einem Modul zusammengefasst ist.

DE 10 2012 213 216 A1 offenbart eine Bremsbetätigungseinheit für eine Kraftfahrzeugbremsanlage vom Typ "Brake-by-wire" mit einem Gehäuse, einer ersten hydraulischen Zylinder-Kolben-Anordnung mit einem in dem Gehäuse verschiebbar geführten Betätigungskolben, der einen hydraulischen Druckraum begrenzt, an den Radbremsen des Kraftfahrzeugs anschließbar sind, wobei der Betätigungskolben mittels einer Betätigungskräfte übertragenden Druckstange betätigbar ist, einer elektrisch steuerbaren Druckbereitstellungseinrichtung, welche als eine zweite hydraulische Zylinder-Kolben-Anordnung ausgeführt ist, deren Kolben durch einen Elektromotor mittels eines Rotations-Translationsgetriebes verschiebbar ist, und einer Ventil-Anordnung mit einer Anzahl von Ventilen zum Einstellen radindividueller Bremsdrücke und zum Trennen oder Verbinden der Radbremsen mit der ersten Zylinder-Kolben-Anordnung oder mit der Druckbereitstellungseinrichtung, wobei die Ventil-Anordnung und die Druckbereitstellungseinrichtung zumindest teilweise innerhalb des Gehäuses angeordnet sind und wobei die Achse des Elektromotors der Druckbereitstellungseinrichtung im Wesentlichen senkrecht zur Längsachse der ersten Zylinder-Kolben-Anordnung angeordnet ist.

DE 11 2013 004 634 T5 offenbart eine Bremseinheit, umfassend eine Hauptzylindereinheit, die an einer Fahrzeugkarosserie fixiert ist, und die einen Hauptzylinder umfasst, der innerhalb eines ersten Gehäuses aufgenommen ist, und der angeordnet ist, um mit einem Bremspedal verriegelt zu sein; und eine Pumpeneinheit die angeordnet ist, um durch einen Motor angetrieben zu werden, und die ein zweites Gehäuse umfasst, innerhalb dem eine Pumpe, die angeordnet ist, um einen Radzylinderdruck zu erhöhen, aufgenommen ist, wobei die Hauptzylindereinheit und die Pumpeneinheit einstückig über eine Halterung, die ein elastisches Element ist, fixiert sind.

### Aufgabe der Erfindung

Aufgabe der vorliegenden Erfindung ist es, ein modulares Packaging für verschiedene Systeme mit kleinem Bauvolumen bereitzustellen.

### Vorteile der Erfindung

Diese Aufgabe wird mit einem System mit den Merkmalen des Anspruchs 1 gelöst. Vorteilhafte Ausgestaltungen des Systems nach Anspruch 1 ergeben sich durch die Merkmale der Unteransprüche.

Es wird ein Packaging mit kleinem Bauvolumen vorgeschlagen mit integrierter redundanter Druckversorgung DV bestehend aus mindestens einer Druckversorgungseinrichtung, mit Ventilen, insbesondere Magnetventilen zusammengefasst in einer Hydraulikunit, mit mindestens einer elektronischen Steuer- und Regeleinheit, mindestens einem Vorratsbehälter, mit einem Single-Hauptbremszylinder und Pedalhubsensoren und Wegsimulator mit Kolben. Dabei sieht die Erfindung verschiedene Varianten modular aufgebauter Betätigungssysteme für Bremssysteme vor, welche möglichst viele Gleichteile für Fertigung und Montage enthalten.

Mögliche erfindungsgemäße Varianten sind vorzugsweise:
Variante a (nicht Teil dieser Erfindung):
   Eine 2-Box Lösung mit zwei Modulen ist, wobei das erste Modul die Druckversorgungseinrichtung (DV1), Hauptbremszylinder (HZ) mit Wegsimulator (WS), Ventilanordnung (HCU), Steuer- und Regeleinheit (ECU) und Vorratsbehälter (VB) umfasst und das zweite Modul ESP oder ABS beinhaltet.
Variante b (nicht Teil dieser Erfindung):
   Eine 1-Box Lösung mit nur einem Modul ist, welches mindestens eine Druckversorgungseinrichtung (DV1, DV2), Ventilanordnung (HCU), Steuer- und Regeleinheit (ECU) und Vorratsbehälter (VB) umfasst,
Variante c (nicht Teil dieser Erfindung):
   Eine 1-Box Lösung mit nur einem Modul ist, welches die Druckversorgungseinrichtung aufweist, wobei mindestens eine Druckversorgungseinrichtung redundant, d.h. z.B. mit einem doppelten Bordnetzanschluss oder redundanten Phasenwicklungen ausgebildet ist und bei der die Ventilanordnung (HCU), Steuer- und Regeleinheit (ECU) und Vorratsbehälter (VB) ebenfalls im Modul enthalten sind.
Variante d (nicht Teil dieser Erfindung):
   Gleiches Modul wie bei Variante c. jedoch mit einer Steuer- und Regeleinheit welche voll oder teilredundanter ausgebildet ist.
Variante e:
   Eine 2-Box Lösung mit zwei Modulen ist, wobei das erste Modul eine Druckversorgungseinrichtung (DV1, DV2), Ventilanordnung (HCU), Steuer- und Regeleinheit (ECU) und Vorratsbehälter (VB) umfasst, wobei die Steuer- und Regeleinheit (ECU) voll oder teilredundanter ausgebildet ist, und das zweite Modul entweder den Hauptbremszylinder (HZ) mit optionalem Wegsimulator (WS).
Variante f:
   Erstes Modul wie bei Variante e, wobei im zweiten Modul anstatt eines Hauptbremszylinders ein elektronisches Bremspedal mit Wegsimulator WS oder nur ein Bremsschalter für Level 5 angeordnet ist bzw. sind.

Hierbei werden vorteilhaft die nachfolgend beschriebenen Gehäuse verwendet. Diese Gehäuse bilden Baugruppen, die zusammengebaut das gesamte Aggregat zum Einbau in das Fahrzeug bilden:
Gehäuse A: Umfasst die Ventilanordnung (HCU) für DV1 und DV2 mit z.B. Ventilen (V), Magnetventilen (MV) und einem oder mehreren Druckgebern (DG).
Gehäuse B: Umfasst die Steuer- und Regeleinheit ECU ohne Redundanz mit einem Hauptstecker oder mit Teil- oder Vollredundanz mit zwei Steckern zum Bordnetz.
Gehäuse C: Für HZ mit Pedalhubsensoren und kleinem Sensor-ECU und Vorratsbehälter VB für die Variante e. Der HZ beinhaltet auch das Pedalinterface (PI) zum Bremspedal und auch Wegsimulator mit Kolben und Feder.

Das Gehäuse A (HCU) wird vorzugsweise aus fließgepresstem Formstück gefertigt, das sich sehr gut eignet zur Befestigung und Montage mit Verstemmtechnik. Hier soll die DV1 mit Kolbenantrieb und KGT zum Motor integriert werden und ebenso DV2 mit kleinbauender Kolbenpumpe von ABS/ESP, außerdem die Ventile und Magnetventile. Hierbei ist DV1 z.B. parallel zur HZ-Achse angeordnet und die Kolbenpumpe DV2 senkrecht zur DV1. Außer der DV1 entspricht DV2 der bewährten Technik von ABS/ESP, ist also kostengünstig mit kleinem Bauvolumen. Alternativ kann auch eine Zahnrad- oder Flügelzellenpumpe mit kontinuierlicher Förderung verwendet werden. Auch ist das Interface zur Steuer- und Regeleinheit ECU ähnlich zu ABS/ESP. Der Hauptbremszylinder HZ mit allen vorgenannten Komponenten (Gehäuse C) kann an Gehäuse A angeschraubt werden - dies gilt für alle Varianten außer für die Varianten e und f. Hier wird das Gehäuse C als Baugruppe separat vom Aggregat an die Stirnwand montiert und die Hydraulikleitung vom Hauptbremszylinder HZ an das Gehäuse A angeschlossen. Bei den Varianten a. und d. (nicht Teil dieser Erfindung) sitzt der Vorratsbehälter VB im Gehäuse A mit zwei Anschlüssen an die Bremskreise oder mit zusätzlichem Anschluss zur Druckversorgung DV. Der Schwimmer im Vorratsbehälter VB enthält ein Target mit Verbindung zum Sensorelement in der Steuer- und Regeleinheit ECU. Der Motor kann vorzugsweise über ein Zwischengehäuse, welches vorzugsweise aus Kunststoff ist, mit dem Gehäuse A verbunden werden. Der für die Kommutierung des Motors und Kolbenposition notwendige Sensor kann vorzugsweise in der Motorachse auf der zum Kolben gegenüberliegenden Seite am Motorgehäuse angebracht und mit der Steuer- und Regeleinheit ECU verbunden werden. Hierbei sitzt der Sensor in einem Zusatzgehäuse zur ECU. Als Redundanz zum elektrischen Anschluss der Magnetspule des Magnetventils kann zur Hauptleiterplatte PCB eine kleine zusätzliche Leiterplatte eingesetzt werden, für einen zweiten Anschluss der Magnetspule. Das Gehäuse A kann auch aufgeteilt werden in ein Gehäuse A1 für die Druckversorgung DV2 mit klein bauender Pumpe und mit dem Ventil MV, sowie Druckgebern DG u.a. Komponenten und ein Gehäuse A2 für die Druckversorgung DV1 mit Motor und Gehäuse und Kolben mit Kugelgewindetrieb KGT und Ventilen mit Anschluss zum Vorratsbehälter VB.

Das dargestellte Packaging erfüllt die Anforderungen für Modularität und kleinem Bauvolumen und ist auch sehr günstig in Kosten und Gewicht.

Durch das Vorsehen eines speziellen Sensorgehäuses ist es möglich, die fertigungsbedingten Toleranzen der Gehäuse der erfindungsgemäßen Einheit einfach auszugleichen, so dass der Motorsensor sicher an der für ihn vorgesehen Position platziert werden kann.

Zudem kann durch eine spezielle Ausgestaltung des Vorratsbehälters dessen Einfüllstutzen bzw. -öffnung vorteilhaft an oder vor der Vorderseite des Gehäuses der elektronischen Steuereinheit bzw. der Betätigungsvorrichtung angeordnet werden, so dass sie gut erreichbar ist. Durch die seitlich am Gehäuse der elektronischen Steuereinheit vorbeiführende Verbindung des vorderen Einfüllstutzens hin zur Rückseite des Gehäuses des Steuereinheit kann der eigentlich Vorratsbehälter sinnvollerweise hinter der Steuereinheit angeordnet werden. Der seitliche bzw. mittlere Bereich des Vorratsbehälters kann vorteilhaft schmal ausgebildet werden, so dass die Betätigungsvorrichtung hierdurch nicht oder nur unwesentlich breiter baut als bei einem herkömmlichen Vorratsbehälter.

Nachfolgend werden verschiedene Varianten anhand von Zeichnungen näher erläutert.

Es zeigen:
- Fig. 1:: Seitenansicht einer erfindungsgemäßen integrierten Einheit mit den Gehäusen A, B, C und Vorratsbehälter VB und Pedalinterface (PI);
- Fig. 2:: die Ansicht von vorn V mit Schnitt durch HCU und ECU;
- Fig. 3:: Schnitt durch den Hauptbremszylinder HZ, Wegsimulator WS und PI;
- Fig. 4:: Darstellung der Pedalhubsensoren;
- Fig. 5:: zeigt das System ohne Hauptzylinder jedoch mit sogenanntem E-Pedal in getrennter Bauweise;
- Fig. 6:: eine Querschnittsdarstellung durch das Motorgehäuse, der elektronischen Steuereinheit sowie des Sensorgehäuses;
- Fig. 7:: platzsparende schematische Ausgestaltung eines Vorratsbehälters;
- Fig. 7a:: Vorratsbehälter gemäß Figur 7 mit schematisch dargestelltem Gehäuse der elektronischen Steuereinheit sowie dem Gehäuse für die Ventilanordnung;
- Fig. 8:: erfindungsgemäße Einheit gemäß Figur 1 mit dem Vorratsbehälter gemäß Figur 7;
- Fig. 9:: Ansicht der Einheit gemäß Figur 8 von vorne.

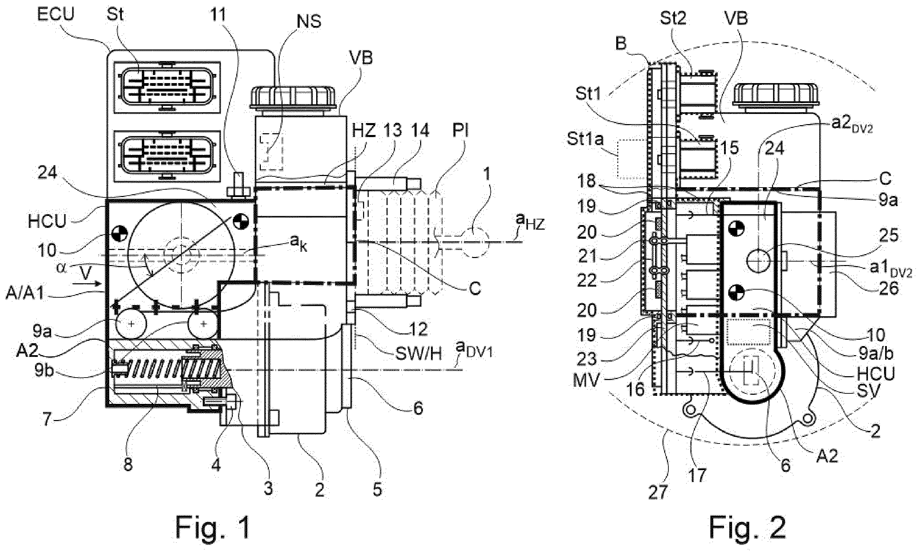

Fig. 1 zeigt die Seitenansicht der integrierten Einheit Gehäuse A mit Ventilanordnung HCU, welcher die Komponenten MV, Druckgeber DG, Kolben für DV1 und DV2 und Befestigung der Motoren von DV1 und DV2 enthält. Alternativ kann das Gehäuse, wie schon beschrieben, auch in die Gehäuse A1 und A2 aufgeteilt werden. Die Komponenten wie z.B. Ventile, Magnetventil MV, Druckgeber DG sind vorzugsweise an einem Fließ- oder Strang gepressten Block 24 befestigt, z.B. die MV vorzugsweise durch Verstemmen oder Clinchen, was auch dessen Abdichtung beinhaltet. Bei der Alternative wird wie oben genannt Gehäuse A1 den Teilblock 24 beinhalten. Gehäuse A2 kann z.B. ein Druckgussteil sein, ohne zu verstemmende Komponenten. Im unteren Teil ist der Kolben 8 der Druckversorgungseinheit DV1 mit Rückstellfeder und Gehäusedeckel 7 gezeigt, der z.B. vorzugsweise von nicht dargestellter Spindel und Kugelgewindetrieb KGT über den Motor 2 angetrieben wird. Dieser ist bei Gehäuse A über ein Zwischengehäuse 3 mit Befestigungsschrauben am HCU Block 24 angeschraubt. Bei Gehäuse A2 ist der Motor ohne Zwischengehäuse angebracht. Der Vorratsbehälter VB ist mit zwei Anschlüssen 9a und 9b mit den Bremskreisen 1 und 2 verbunden. In Verlängerung von 9c ist im Gehäuse das Saugventil SV für die Druckversorgung DV platziert.

Auf der gegenüberliegenden Seite ist das Sensorgehäuse 3 mit Drehwinkelsensor sowohl mit Motor 2 als auch ECU 18 über eine nicht dargestellte vorzugsweise flexible Leiterplatte mit dem Zwischengehäuse verbunden. Auf der Oberseite der Steuer- und Regeleinheit ECU sind die Stecker angebracht, die bei der redundanten ECU 2-fach ausgeführt sind. Bei der Variante mit separatem Hauptbremszylinder HZ ist mit 11 die entsprechende Verbindungsleitung zum Hauptbremszylinder HZ vorgesehen. Der Vorratsbehälter VB kann wie üblich einen Niveausensor (NS) mit Schwimmer beinhalten, wobei das Target mit Sensorelement in der Steuer- und Regeleinheit ECU angeordnet sind, welche vorzugsweise bei Level 4 und 5 redundant ausgeführt ist. Hinter dem Ventilanordnungsblock HCU ist in der vollintegrierten Version der Hauptbremszylinder HZ angeordnet, der mit Befestigungsschrauben 13 am HCU-Block 24 angeschraubt ist.

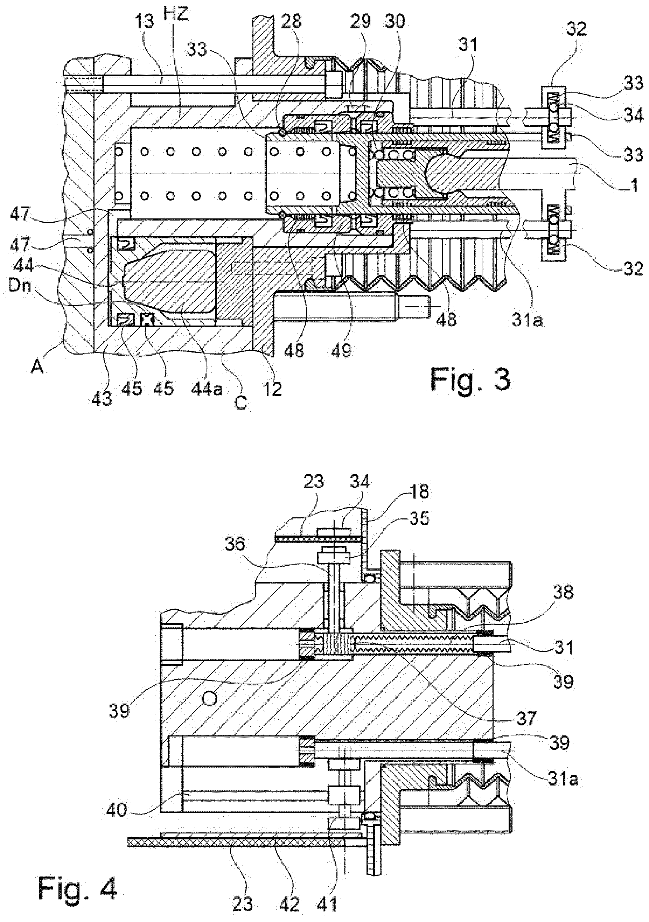

Figur 4 zeigt hier mehr Details. Am Hauptbremszylinder HZ befindet sich üblicherweise ein Flansch 12 zur Befestigung mit entsprechenden Schrauben 14 an der gestrichelt gezeichneten Stirnwand. In der Variante ohne Hauptbremszylinder HZ kann ein vereinfachter Flansch auch für die Befestigung im Aggregate- oder Motorraum eingesetzt werden. Hierbei sollte die Einheit wie an der Stirnwand für gute Entlüftung mit ca. 15 ° geneigt sein. Mit dem Hauptbremszylinder HZ sind Pedalinterface PI und Pedalstößel 1 verbunden. Die Anschlüsse der Ventilanordnung HCU zu den Radbremsen RB kann auf der Motorseite oder auf der Stirnseite erfolgen.

Die Achse der Druckversorgungseinrichtung DV1 liegt hierbei parallel zur HZ-Achse oder annähernd senkrecht zum Flansch und die DV2-Achse senkrecht zur Achse der Druckversorgungseinrichtung DV1. Die Achse a_{DV2} des Kolbens der Druckversorgungseinrichtung DV2 kann sowohl parallel zur Achse aDV1 der Druckversorgungseinrichtung DV1 als auch im Winkel α verdreht sein, was die Baulänge vorteilhaft verkürzt. Als weitere Alternative zur beschriebenen Anordnung von DV2 kann eine Anordnung von α_{DV2} parallel zur Hochachse eingesetzt werden. Hierbei muss für den unteren Stecker ein anderer Einbauort z.B. auf der gegenüberliegenden Seite der Steuer- und Regeleinheit ECU vorgesehen werden.

Fig. 2 zeigt die Ansicht von vorn. Hier wird gezeigt, dass die Umrißkontur noch innerhalb des kleinen Vakuum Vak. von 8" untergebracht werden kann und somit für den Einbau an der Spritzwand geeignet ist. Der große Vorteil liegt in der Baubreite von ca. 50 % von o.g. BKV, was für Rechts- und Linkslenker sehr günstig ist. Auch die Baulänge zu o.g. BKV ist erheblich kürzer, und bildet somit eine Basis für eine breite Anwendung des erfindungsgemäßen Modularkonzeptes. Hier sind auch wieder die verschiedenen Gehäuse A (A1, A2), B, C und VB vorzusehen. Gehäuse B liegt z.B. hinter dem HCU-Block 24 und wird mit diesem verschraubt und abgedichtet, wie bei ABS.

Der DV2-Motor wirkt mit z.B. Exzenter auf die Kolbenpumpe wie bei ABS/ESP. Bekanntlich ist der Bauraum hierfür sehr klein. Alternativ kann der Motor auch eine kurzbauende Zahnradpumpe antreiben. Auf der linken Seite ist die ECU mit Gehäuse 18 angeordnet mit Haupt-Leiterplatte PCB 23, die mit dem obenliegenden Stecker St verbunden ist.

Die MV-Spulen sind über Anschlussstege 21 wie üblich mit Einpresskontakten mit der Leiterplatte PCB 23 verbunden. Die Verbindung der Anschlussstege 21 zum Spulendraht gilt durch automatische Fertigung mit Prozesskontrolle als ausfallsicher, nicht unbedingt der Kontakt zur PCB. Die MV haben wichtige Funktionen und sind für insbesondere Level 4 und 5 mit redundanter Ansteuerung der Treiber 20/20r auszugestalten, wobei die Treiber noch einen Trennschalter besitzen. Die Kontaktierung zur Leiterplatte PCB kann ebenso redundant gestaltet werden durch einen zweiten Kontakt am Anschlusssteg 21, der mit einer kleinen Leiterplatte PCB 22 mit dem zweiten Treiber verbunden ist.

Vorteilhaft ist aus Kostengründen eine 1-teilige Leiterplatte PCB vorzusehen. Für den Fall des Eindringens von Wasser können die Leiterplatten PCB durch Stege mit Dichtung im Gehäuse der Steuer- und Regel ECU mit den beiden redundanten Schaltungen getrennt werden. Auch mögliche Leiterbahnrisse sind vorteilhaft durch Redundanzen abgedeckt bzw. ausgeschlossen. Wichtig sind auch die restlichen elektronischen Verbindungen von Motor 26 zu Leiterplatte PCB 23 mit elektrischer Verbindung 15, von Motor 2 mit der elektrischen Verbindung 16 des DV1 Motors und die mit dem Drehwinkelsensors 6. Der Vorteil der parallelen Anordnung von DV1 ist die kurze Länge der elektrischen Verbindung.

Fig 3 zeigt den Hauptbremszylinder HZ mit Gehäuse, in dem der HZ-Kolben 33 und WS-Kolben mit Feder für die Gegenkraft und Pedalcharakteristik eingebaut ist. Der Wegsimulatorkolben kann auch im Block A bzw. Gehäuse A untergebracht werden. Der Kolben besitzt ebenfalls redundante Dichtungen 45 mit Drossel Dr zum Innenraum. Bei Ausfall der Dichtung 45 wird über den Leckfluß der Ausfall erkannt und der Ausfall ist nicht relevant. Diese Drossel Dr mit kleinem Leckfluß erlaubt die Diagnose des Ausfalls der ersten Dichtung. Der Wegsimulator-Kolben stützt sich am Flansch 12 ab und benötigt deshalb kein getrenntes Verschlussstück. Parallel zum Wegsimulator-Kolben ist der HZ-Kolben 23 mit Rückstellfeder 50 angeordnet. Die Führung des Kolbens kann in Gleitringen 48 mit geringer Reibung erfolgen, auch wird hierbei die Dichtwirkung des Kolbens weniger beeinträchtigt. Vorzugsweise wird für die Gleitringe und Dichtungen ein getrenntes Lagerteil 49 verwendet, welches sich am Flansch abstützt und auch der Anschlag des Kolbens 23 mittels Anschlagring 28. Zur Diagnose des Wegsimulators WS kann im HZ-Kolben ein Kraft-Weg-Sensor KWS 30 angeordnet werden. Mit dem Kolben 23 und dem Pedalstößel sind die Sensorstangen 31 und 31a verbunden. Diese Stangen sind mit einer Rastkupplung 32-34 verbunden, jeweils mit Kolben und Pedalstößel. Diese Kupplung besteht aus Kugel 34 mit Feder 33 im Gehäuse 22. Damit wird eine Blockierung des Pedalstößels beim Klemmen einer Sensorstange vermieden.

Fig. 4 zeigt die Anordnung von zwei alternativen Ausführungsmöglichkeiten der Pedalwegsensoren. Die erste Variante mit Zahnstange 38, Zahnrad 37, Antriebswelle 36 zum Target 35 und Sensorelement 34 auf PCB 23 wurde bereits in DE102015104246 beschrieben. Diese Version benötigt wenig Einbauraum und ist kostengünstig. Bei der unteren Variante ist ein Führungsteil 39 z.B. mit Zapfen in die Sensorstange eingepresst. Dieses wird im oberen Teil in einer Führungsleiste 40 geführt, damit eine Winkelverdrehung klein ist, was sich auf das Target 41 auswirkt. Dieses Target wirkt auf einen induktiven Sensor 42 mit Auswerteschaltung und ist mit der Haupt-PCB 23 verbunden und sitzt im ECU-Gehäuse 14.

Für die oben beschriebenen Varianten a bis f (a bis d nicht Teil dieser Erfindung) können folgende Komponenten vorteilhaft gleich ausgebildet sein:

| | |
|---|---|
| DV1: | für alle Varianten a bis f; |
| DV2: | für alle Varianten mit redundanter Druckversorgung; |
| HCU/ECU: | für die zwei Varianten ohne redundante Druckversorgung; |
| HZ und WS: | separat und integriert mit Pedalsensoren für fünf der sechs Varianten, mit Ausnahme von Variante f. ohne Hauptbremszylinder. Separater HZ jedoch mit zusätzlichem VB. |
| MV: | für alle Varianten |
| Motorsensor: | für alle Varianten. |

Bis auf das E-Pedal entsprechend System f. sind alle Komponenten modular. Damit hat der Hersteller und Anwender einen modularen Systembaukasten (OEM) eine hervorragende Basis, auch für Kostenminimierung.

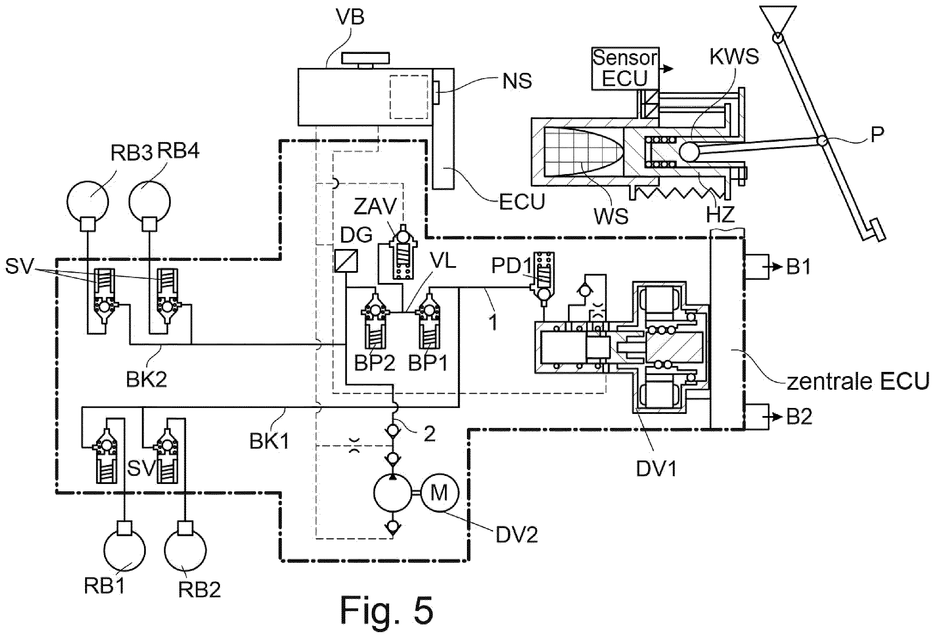

Fig. 5 zeigt die Druckversorgungseinrichtungen DV1 und DV2 mit Ventilanordnung. Hierbei ist ein elektr. Bremspedal, ein sog. E-Pedal, mit WS-Pedalwegsensoren mit kleiner Sensor-ECU und KWS ohne hydraulisch wirkenden Hauptbremszylinder HZ in einem Aggregat zusammengefasst sind. Dies hat Vorteile, wenn das Einbauvolumen im Aggregateraum klein ist oder die Geräuschanforderungen hoch. Anstelle des HZ mit VB (nicht ausgeführt in Fig. 5) kann auch die Anordnung mit Pedalbetätigung mit WS sog. E-Pedal eingesetzt werden. Die Signale der Pedalwegsensoren werden in einer Sensor-ECU aufgearbeitet und der zentralen ECU zugeführt. Auch kann für Level 5 alternativ zum E-Pedal ein Bremsschalter eingesetzt werden.

Das o.g. Aggregat besitzt den 2-Kreis-VB mit Schwimmer und Niveausensor NS, der in der zentralen Steuer- und Regeleinheit ECU integriert sein kann. Dieser Niveausensor NS soll ebenfalls redundant ausgebildet sein und stetig das Niveau messen, da hierüber ein Volumenverlust durch Leck schnell erfasst wird. Da hier die Verbindung zum Hauptbremszylinder HZ fehlt und damit auch die Rückfallebene zum Hauptbremszylinder HZ bei dem Ausfall beider Druckversorgungseinrichtungen DV1 und DV2 und/oder des Bordnetzes, sind die Ventile BP1 und BP2 vorzugsweise als stromlos geschlossene Ventile ausgeführt.

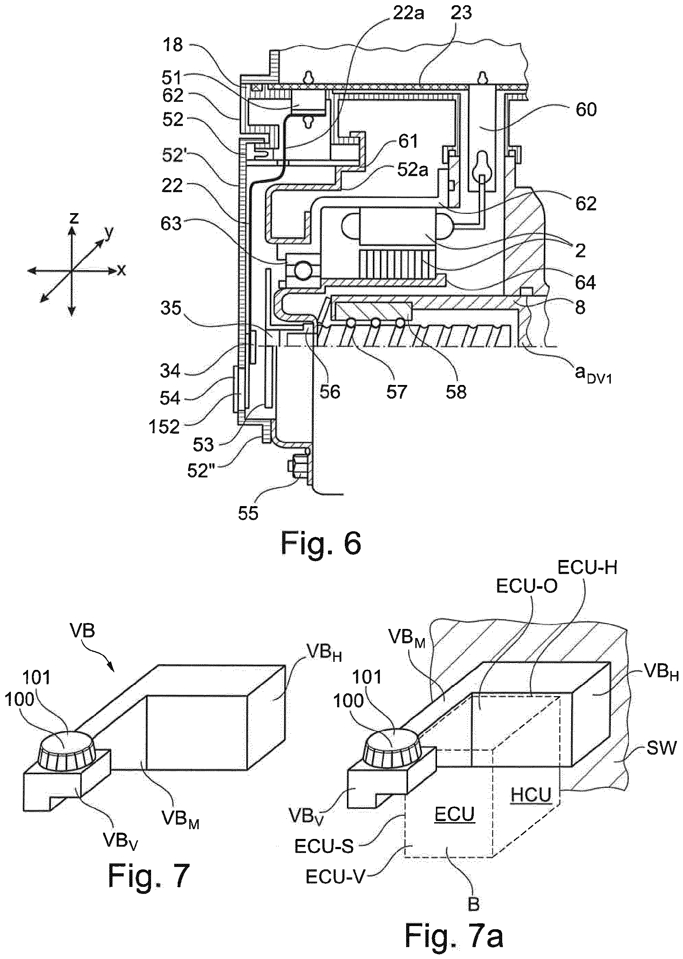

Eine wichtige Komponente eines elektrischen Motorantriebes ist der Motorsensor 34 für die elektronische Kommutierung und Steuerung der Position des Kolbens. Der Motor kann mit verschiedenen Antriebsarten, z.B. Getriebe, Trapez oder Spindel 57 mit Kugelgewindetrieb 58, wie in Fig. 6 gezeigt, kombiniert werden.

So können verschiedene Sensortypen, wie z.B. Segmentsensoren mit induktiven oder auch magnetfeldempfindlichen Sensoren, zum Einsatz kommen oder aber Sensoren, welche in der Motor- oder Getriebeachse angeordnet sind. Diese Sensoren sind besonders einfach im Aufbau, und setzen sich aus einem Sensortarget, z.B. in Form eines zwei- oder mehrpoliger Magneten, und einem magnetfeldempfindlichen Sensorelement, z.B. in Form eines Hallsensors, GMR-Sensors, o.ä. zusammen. Dieses Sensorelement 34 ist elektrisch mit der elektronischen Steuereinheit ECU verbunden, welche entweder unmittelbar oder über ein Zwischengehäuse an den Motor angebaut ist. Das Sensorelement 34 ist vorzugsweise in einem Sensorgehäuse bestehend aus einem äußeren Gehäuseteil 52 und einem inneren Gehäuseteil 52a angeordnet, welche zusammen u.a. eine Leiterplatte 22 aufnehmen, auf der das Sensorelement 34 angeordnet sein kann.

Um die verschiedenen Einbautoleranzen zwischen Gehäuse 18 der elektronischen Steuereinheit ECU, dem Motorgehäuse 62 und gegebenenfalls noch eines nicht dargestellten Zwischengehäuse und dem Sensorgehäuse 52/52a zu beherrschen, ist erfindungsgemäß ein elastisches Teil 61. Im Extremfall müssen dabei Toleranzen in allen drei Richtungen x, y, z ausgeglichen werden. Dies wird erfindungsgemäß durch einen entsprechenden Aufbau und Befestigung des Sensorgehäuses an dem Gehäuse 18 der elektronischen Steuereinheit ECU und an dem Motorgehäuse gelöst. Dabei ist das Sensorgehäuse vorteilhaft zweiteilig in ein äußeres Gehäuse 52 und ein inneres Gehäuse 52a unterteilt, wobei die Gehäuseteile 52, 52a über übliche Verbindungstechniken wie z.B. Schweißen oder Kleben miteinander verbunden und vorzugsweise aus Kunststoff gefertigt sind. Das Sensorgehäuse ist zudem am Motorgehäuse 62 befestigt, vorzugsweise an zwei Stellen. Die Sensorleiterplatte 22 ist im oberen Teil zur Steckerleiste flexibel, um die oben genannten Toleranzen zu beherrschen. Dazu eignet sich z.B. ein Flex-PCB (flexible Leiterplatte). Die elektrische Verbindung 22a von dieser flexiblen Leiterplatte 22 zur Hauptleiterplatte 23 der elektronischen Steuereinheit ECU erfolgt vorzugsweise über die besonders fehlersichere Steckerleiste 51 mit Einpresskontakten. Zur Montage mit der Hauptleiterplatte 23 besitzt das Gehäuse 18 der elektronischen Steuereinheit ECU eine Aussparung mit Deckel.

Das Sensorgehäuse 52, 52a ist mit einem Vorsprung des ECU-Gehäuses 18 verbunden und daran fixiert. Dazwischen liegt ein elastisches Teil 61, welches z.B. eine flexible elastische Dichtung oder ein Dichtungsbalg sein kann. Vorzugsweise ist das elastische Teil als Lippendichtung ausgebildet ist. Diese flexible und elastische Dichtung 61 dient somit zum 3-achsigen Toleranzausgleich. Die elektrische Verbindung von der Motorwicklung zur Leiterplatte 23 erfolgt über eine übliche Steckkontaktierung.

Diese in Figur 6 dargestellte Sensoranordnung ermöglicht zusätzlich noch die Messung der Rotorexzentrizität, welche auf die Spindel wirkt und Querkräfte an dem Kolben 8 erzeugt. Zur Messung der Rotorexzentrizität dient ein auf dem Rotor oder der Spindelmutter 56 angeordnetes Vermessungsmittel 53, das im einfachsten Fall ein Messflansch oder eine Scheibe ist. Die Rotorexzentrizität wirkt sich auch in axialer Richtung aus und kann mit Lasertechnik gemessen werden. Hierzu besitzt das äußere Sensorgehäuseteil 52a eine Öffnung 152 in seinem unteren Bereich 52", die nach der Messung mit einem Verschlussstopfen 54 geschlossen wird. Die Oberfläche des Vermessungsmittels 53 kann auf seiner dem äußeren Sensorgehäuseteil 52 zugewandten Seite für die Messung Markierungen aufweisen, mit einer Beschichtung versehen und/oder profiliert sein. Der untere Bereich 52" ist mittels einer Befestigungsschraube 55 an dem Motorgehäuse 62 befestigt.

Die Figur 7 zeigt eine platzsparende schematische Ausgestaltung eines Vorratsbehälters VB, der einen vorderen Bereich VB_{V}, einen mittleren Bereich VBM sowie einen hinteren Bereich VB_{H} aufweist. Der vordere Bereich VB_{V} weist eine obere Einfüllöffnung 100 auf, die mit dem Deckel 101 verschließbar ist. Wie in Figur 7a dargestellt, umgreift der Vorratsbehälter VB das Gehäuse B der elektronischen Steuereinheit ECU an drei Seiten, nämlich dessen Vorderseite ECU-V, dessen seitliche Wandung ECU-S sowie dessen Rück- bzw. Hinterseite ECU-H. Die Rückseite ECU-H ist der Spritzschutzwand SW zugewandt. Je nach Ausbildung der Einheit kann der Vorratsbehälter VB, wie in Figur 7a dargestellt, auch an der Rückwand des Gehäuses der Ventilanordnung HCU anliegen bzw. diese Hintergreifen.

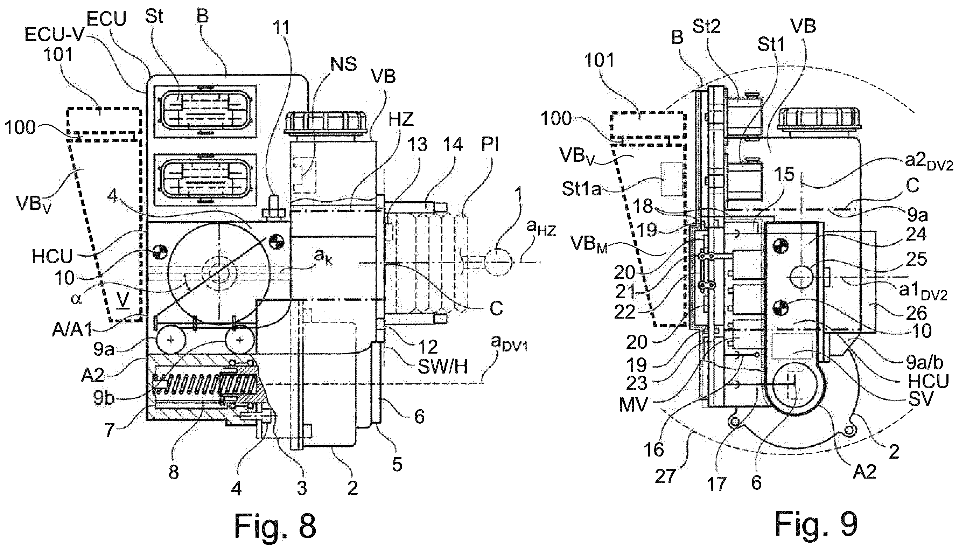

Die Figuren 8 und 9 zeigen eine Seitenansicht sowie die Vorderansicht auf eine erfindungsgemäße Einheit, die bis auf die Ausgestaltung des Vorratsbehälters VB, der Einheit, wie sie in den Figuren 1 und 2 dargestellt und beschrieben ist, entspricht. Wie der Figur 8 zu entnehmen ist, ist der vorderer Bereich VB_{V} der Vorderseite ECU-V des Gehäuses B der elektronischen Steuereinheit ECU vorgelagert, so dass die Einfüllöffnung besser zu erreichen ist. Da es i.d.R. aus platztechnischen Gründen nicht sinnvoll ist, den gesamten Vorratsbehälter VB vor oder neben der elektronischen Steuereinheit ECU anzuordnen, sieht die Erfindung vor, dass nur ein schmaler mittlerer Bereich VBM sich seitlich neben dem Gehäuse B zur Rückseite ECU-H der ECU hin erstreckt, wobei der mittlere Bereich VBM dort in seinen vom Volumen wesentlich größeren hinteren Bereich VBH mündet, welcher hinter dem Gehäuse B der elektronischen Steuereinheit ECU angeordnet ist. Selbstverständlich ist es auch möglich, dass der Vorratsbehälter VB auch das Gehäuse B der ECU übergreift. Sofern die Spritzwand SW in einem Winkel ϕ zur Senkrechten angeordnet ist, sollte der vordere Bereich VBV des Vorratsbehälters VB so ausgebildet sein, dass die Flächennormale der Einfüllöffnung 100 senkrecht ausgerichtet ist.

### Bezugszeichenliste

- HZ: Hauptbremszylinder (Single)
- a_{HZ}: Hauptachse des Hauptbremszylinders
- a_{DV1}: Achse der ersten Druckversorgungseinrichtung DV1
- a1_{DV2}: horizontale Ausrichtung der Achse der zweiten Druckversorgungseinrichtung DV2 senkrecht zur Achse a_{DV1} der ersten Druckversorgungseinrichtung DV1
- a2_{DV2}: vertikale Ausrichtung der Achse der zweiten Druckversorgungseinrichtung DV2 senkrecht zur Achse a_{DV1} der ersten Druckversorgungseinrichtung DV1
- DV: Druckversorgung
- HCU: Hydraulikcontrolunit
- ECU: elektronische Computing Unit
- ECU-V: Vorderseite der ECU
- ECU-S: Seitliche Wandung der ECU
- ECU-O: Oberseite der ECU
- ECU-H: Hinterseite der ECU, der Spritzwand des Fahrzeugs zugewandt
- PI: Pedalinterface
- SW/H: Spritzwand/Halterung
- St: Stecker
- BKV: Bremskraftverstärker
- NS: Niveausensor
- RZ: Radzylinder
- MV: Magnetventil
- Dr: Drossel
- SV: Saugventil von DV1
- A: Gehäuse für HCU und DV1 und optional DV2
- A1: Teilgehäuse für HCU und DV2
- A2: Teilgehäuse für DV1
- B: Gehäuse für ECU
- C: Gehäuse für HZ und Wegsimulator WS mit Flansch
- a_{DV1}: Motorachse von DV1
- a_{OV2}: Motorachse von DV2
- a_{HZ}: Längsachse vom Hauptbremszylinder HZ
- VB: Vorratsbehälter
- VB_{H}: Hinterer Bereich des Vorratsbehälters
- VB_{M}: Mittlerer Bereich des Vorratsbehälters
- VB_{V}: Vorderer Bereich des Vorratsbehälters
- 1: Pedalstößel
- 2: Motor
- 3: Zwischengehäuse
- 4: Befestigungsschraube
- 5: Sensorgehäuse
- 6: Drehwinkelsensor
- 7: Verschlussdeckel
- 8: Kolben
- 9a/9b: Anschlüsse zum VB
- 10: Anschlüsse zum RZ
- 11: Anschluss zum HZ
- 12: Flansch von HZ
- 13: Befestigungsschraube
- 14: Befestigungsschraube zu Stirnwand oder Halterung
- 15: elektrische Verbindung Motor von DV2 zu ECU
- 16: elektrische Verbindung von DV1 Motor
- 17: elektrische Verbindung von Drehwinkelsensor
- 18: ECU-Gehäuse
- 19: Steg mit Dichtung
- 20: Treiber für MV
- 21: Anschlusssteg MV
- 22: Kleines PCB
- 22a: elektrische Verbindung der Haupt-PCB zum PCB 22 der ECU
- 23: Haupt-PCB
- 24: HCU-Block
- 25: Bohrung für Exzenter-Kolbenpumpe DV2
- 26: Motor für DV2
- 27: Umriss Kontur 8" Vakuum-BKV
- 28: Anschlagring für Kolben
- 29: Leitung zum VB
- 30: KWS
- 31/31a: Pedalstange
- 32: Federgehäuse
- 33: HZ-Kolben
- 34: Sensorelement
- 35: Target
- 36: Antriebswelle
- 37: Zahnrad
- 38: Zahnstange
- 39: Führungsteil
- 40: Führungsleiste
- 41: Target
- 42: induktiver Sensor
- 43: HZ-Gehäuse
- 44: WS-Kolben
- 44a: WS-Feder
- 45: WS-Dichtung
- 46: Gleitring
- 47: Verbindungsbohrungen WS-HZ und HCU-Block 24
- 48: Gleitringe
- 49: Lagerteil
- 50: Rückstellfeder
- 51: Steckerleiste mit Einpresskontakten
- 52: Sensorgehäuse 1
- 52a: Sensorgehäuse 2
- 53: Messflansch
- 54: Verschlussstopfen
- 55: Befestigung Sensorgehäuse
- 56: Gewindemutter
- 57: Gewindespindel
- 58: KGT
- 59: Kolben
- 60: Motorkontaktierung zu ECU
- 61: Gehäusedichtung
- 62: Motorgehäuse
- 63: Motorlager
- 64: Rotor
- 100: Öffnung des Vorratsbehälters
- 101: Verschlussdeckel des Vorratsbehälters
- 152: verschließbare Öffnung

## Patentansprüche

1. Betätigungsvorrichtung für ein hydraulisch wirkendes Bremssystem, folgende Komponenten aufweisend:
- einen in einem Gehäuse (C) angeordneten Hauptbremszylinder (HZ) mit mindestens einem Kolben, der von einer Betätigungsvorrichtung, insbesondere in Form eines Bremspedals, kraftbeaufschlagbar ist,
- mindestens einer Druckversorgungseinrichtung (DV1, DV2), wobei mindestens eine Druckversorgungseinrichtung (DV1) eine von einem elektromotorischen Antrieb (M) angetriebene Kolben-Zylinder-Einheit oder einer Doppelhubkolbenpumpe ist, wobei der Antrieb (M) direkt oder über ein Übersetzungsgetriebe, insbesondere ein Kugelumlaufgetriebe, den Kolben der Kolben- bzw. Doppelhubkolbenpumpe verstellt,
- mindestens einer Ventilanordnung (HCU) mit Magnetventilen,
- mindestens einer elektronischen Steuer- und Regeleinheit (ECU),
wobei das Bremssystem mindestens zwei Hydraulikkreise (BK1, BK2) aufweist und mittels der Druckversorgungseinrichtung (DV1) in mindestens einer einem Hydraulikkreis (BK1, BK2) zugeordneten Radbremse (RB1, RB2, RB3, RB4) eine Druckänderung vornehmbar ist,
wobei die Ventilanordnung (HCU) und mindestens ein Kolben und Druckraum mindestens einer Druckversorgungseinrichtung (DV1, DV2) in einem ersten Gehäuse (A) angeordnet sind, und dass das Gehäuse (C) der Betätigungsvorrichtung mit dem ersten Gehäuse (A) verbunden ist;
**dadurch gekennzeichnet, dass** die Betätigungsvorrichtung eine 2-Box Lösung mit zwei Modulen ist, wobei das:
- erste Modul eine Druckversorgungseinrichtung (DV1, DV2), Ventilanordnung (HCU), Steuer- und Regeleinheit (ECU) und Vorratsbehälter (VB) umfasst, wobei die Steuer- und Regeleinheit (ECU) voll oder teilredundant ausgebildet ist; und
- das zweite Modul entweder den Hauptbremszylinder (HZ) mit optionalem Wegsimulator (WS) oder ein elektronisches Bremspedal (P - Fig. 5) mit Wegsimulator WS (WS - Fig. 5) oder nur einen Bremsschalter für Level 5 umfasst

2. Betätigungsvorrichtung nach Anspruch 1, **dadurch gekennzeichnet, dass** der Hauptbremszylinder (HZ) ein Single-Hauptbremszylinder mit nur einem einzigen Kolben ist, wobei der Kolben nur einen Druckraum begrenzt und der Kolben von der Betätigungsvorrichtung kraftbeaufschlagbar ist.

3. Betätigungsvorrichtung nach Anspruch 1 oder 2, wobei das zweite Modul das elektronische Bremspedal (P - Fig. 5) mit Wegsimulator (WS - Fig. 5) und WS-Pedalwegsensoren mit Sensor-ECU und Kraft-Weg-Sensor (KWS) umfasst.

4. Betätigungsvorrichtung nach einem der vorhergehenden Ansprüche, **dadurch gekennzeichnet,**
- **dass** mindestens eine elektrische Steuer- und Regeleinheit (ECU) zwei voneinander getrennte Bordnetzanschlüsse aufweist;
- **dass** der Antrieb (M) mindestens einer Druckversorgungseinrichtung (DV1, DV2) einen Motor mit redundanten Wicklungssystemen mit insbesondere 2x3-Phasenschaltung aufweist,
- **dass** ein zusätzlicher redundanter Anschluss, insbesondere über eine zusätzliche redundante Leiterplatte; und/oder
- **dass** ein zusätzlicher redundanter Treiber für die Spule eines Magnetventils (MV) vorgesehen ist.

5. Betätigungsvorrichtung nach einem der vorhergehenden Ansprüche, **dadurch gekennzeichnet, dass** eine zweite, insbesondere kontinuierlich fördernde, Druckversorgungseinrichtung (DV2) vorgesehen ist, die entweder im ersten Gehäuse (A) oder in einem weiteren Gehäuse (A1), insbesondere zusammen mit einer Ventilanordnung (HCU), angeordnet ist;
optional wobei mindestens eine Druckversorgungseinrichtung (DV1, DV2) pro Hydraulikkreis (BK1, BK2) vorgesehen ist.

6. Betätigungsvorrichtung nach einem der vorhergehenden Ansprüche, **dadurch gekennzeichnet, dass** der hydraulische Druckraum bzw. die hydraulischen Druckräume der Druckversorgungseinrichtung (DV1) sowie die Ventilanordnung (HCU) mit Magnetventilen, Hydraulikleitungen Hydraulikkolben und Hydraulikräume in einem Gehäuse (A) oder maximal zwei direkt benachbarten hydraulisch verbundenen Gehäusen (A, A1) angeordnet sind, welche im Verbund eine Einheit bilden.

7. Betätigungsvorrichtung nach einem der vorhergehenden Ansprüche, **dadurch gekennzeichnet, dass** die Achse (a_{DV1}) der ersten Druckversorgung (DV1) senkrecht zur Achse (a1_{DV2}, a2_{DV2}) der zweiten Druckversorgung (DV2) angeordnet ist und/oder die Achse (a2_{DV2}) der zweiten Druckversorgung (DV2) vertikal angeordnet ist.

8. Betätigungsvorrichtung nach einem der vorhergehenden Ansprüche, **dadurch gekennzeichnet, dass** mindestens eine Druckversorgungseinrichtung (DV2) eine kontinuierlich fördernde Pumpe, insbesondere Zahnradpumpe oder Exzenterkolbenpumpe, ist, welche von einem elektromotorischen Antrieb (M) angetrieben ist, insbesondere im Normalbetrieb für die ABS- und/oder ESP-Funktion zuständig, ist.

9. Betätigungsvorrichtung nach einem der vorhergehenden Ansprüche, **dadurch gekennzeichnet, dass** die Druckversorgungseinrichtung (DV2) bei schnellem Druckaufbau oder Druckaufbau über 120 bar die andere Druckversorgungseinrichtung (DV1) unterstützt und/oder die Druckversorgung bei Fading und/oder für die ABS-Funktion vornimmt und/oder bei Ausfall der anderen Druckversorgung (DV1) dessen Funktion mit übernimmt.

10. Betätigungsvorrichtung nach einem der vorhergehenden Ansprüche, **dadurch gekennzeichnet, dass** die Druckversorgungseinrichtung (DV1) den Druckaufbau für Druckbereiche kleiner gleich 120 bar und die ABS-Funktion übernimmt.

11. Betätigungsvorrichtung nach einem der vorhergehenden Ansprüche, **dadurch gekennzeichnet, dass** bei Ausfall der Druckversorgungseinrichtung (DV2) nur ein maximaler Druck von 120 bar über die Druckversorgung (DV1) zur Verfügung steht.

12. Betätigungsvorrichtung nach einem der vorhergehenden Ansprüche, **dadurch gekennzeichnet, dass** die Druckmodulation in den Radbremsen (RB1, RB2, RB3, RB4) eines Bremskreises (BK1, BK2) für die ABS-Funktion mittels der dem Bremskreis (BK1, BK2) zugeordneten Druckversorgungseinrichtung (DV1, DV2) im Multiplexbetrieb, insbesondere mittels eines Kolbens der Druckversorgungseinrichtung Volumina einer Hydraulikflüssigkeit zur Druckeinstellung verstellt werden, erfolgt.

13. Betätigungsvorrichtung nach einem der vorhergehenden Ansprüche, **dadurch gekennzeichnet, dass** mindestens eine Hydraulikhauptleitung (4, 5) über ein Abführventil (AV1, AV2) mit einem Vorratsbehältnis (VB) und/oder die Verbindungsleitung (2) über ein zentrales Abführventil (ZAV) mit einem Vorratsbehältnis (VB), insbesondere zum Druckabbau in mindestens einer Komponente (RB1, RB2, RB3, RB4) und/oder beiden Hydraulikkreisen (BK1, BK2), verbindbar ist.

14. Betätigungsvorrichtung nach einem der vorhergehenden Ansprüche, **dadurch gekennzeichnet, dass** die elektronische Steuerungseinheit (ECU), in einem Gehäuse (18) angeordnet ist, wobei ein Sensortarget (35) an dem Rotor (64) oder einem um die Achse (a_{DV1}) verdrehbaren Gewindeteil (56) verbunden ist, und ein Sensorelement (34) in einem Sensorgehäuse (52, 52a) angeordnet ist, wobei das Sensorgehäuse (52, 52a) entweder
- mittels einer elastischen Verbindung mit dem Gehäuse (18) der
elektronischen Steuereinheit (ECU) in verbunden ist
und/oder
- ein inneres Gehäuseteil (52a) und ein äußeres Gehäuseteil (52) aufweist, wobei mindestens ein Gehäuseteil (52, 52a) mit dem Gehäuse (18) der Steuereinheit (ECU) verbunden ist, wobei ein elastisches Teil (61), insbesondere in Form einer elastischen Dichtung oder eines Dichtungsbalgen, oder mindestens eine Feder Bereiche des mindestens einen Gehäuseteils (52, 52a) gegen einen Bereich des Gehäuses (18) drückt.

15. Betätigungsvorrichtung nach einem der vorhergehenden Ansprüche, **dadurch gekennzeichnet, dass** das Gehäuse (18) der elektronischen Steuereinheit (ECU) eine Vorderseite (ECU-V), eine Oberseite (ECU-O), eine seitliche Wandung (ECU-S) und eine Hinterseite (ECU-H) aufweist, wobei ein Vorratsbehälter (VB) für Hydraulikmedium an der elektronischen Steuereinheit (ECU) oder von dieser beabstandet angeordnet ist, wobei der Vorratsbehälter (VB) eine, insbesondere mittels eines Deckels (101), verschließbare Öffnung (100) zum Einfüllen von Hydraulikmedium aufweist, welche insbesondere vor der Vorderseite (ECU-V) der elektronischen Steuereinheit (ECU) angeordnet ist, wobei der Vorratsbehälter (VB) die elektronische Steuereinheit (ECU) von mindestens zwei, insbesondere mindestens drei, Seiten (ECU-V, ECU-S, ECU-H) umgreift bzw. sich entlang dieser Seiten zumindest teilweise erstreckt.

16. Betätigungsvorrichtung nach einem der vorhergehenden Ansprüche, wobei die Steuer- und Regeleinheit (ECU) einen Stecker zum Bordnetz umfasst, der oberhalb der HCU angeordnet ist, und wobei der Stecker über die mindestens eine Ventilanordnung (HCU) zeigt.

17. Betätigungsvorrichtung nach einem der vorhergehenden Ansprüche, wobei die Steuer- und Regeleinheit (ECU) zwei Stecker zum Bordnetz umfasst, die jeweils oberhalb der HCU angeordnet sind, und wobei die Stecker jeweils über die mindestens eine Ventilanordnung (HCU) zeigen.

## Claims

1. Actuating device for a hydraulically acting brake system, having the following components:
- a master brake cylinder (HZ) which is arranged in a housing (C) and which has at least one piston which can be acted on with force by an actuating device, in particular in the form of a brake pedal,
- at least one pressure supply device (DV1, DV2), wherein at least one pressure supply device (DV1) is a piston-cylinder unit driven by an electromotive drive (M) or is a double-action piston pump, wherein the drive (M) adjusts the piston of the piston pump or double-action piston pump directly or via a transmission gear, in particular a recirculating ball gear,
- at least one valve arrangement (HCU) with solenoid valves,
- at least one electronic open-loop and closed-loop control unit (ECU),
wherein the brake system has at least two hydraulic circuits (BK1, BK2) and a pressure change can be performed by means of the pressure supply device (DV1) in at least one wheel brake (RB1, RB2, RB3, RB4) assigned to a hydraulic circuit (BK1, BK2),
wherein the valve arrangement (HCU) and at least one piston and pressure chamber of at least one pressure supply device (DV1, DV2) are arranged in a first housing (A), and wherein the housing (C) of the actuating device is connected to the first housing (A);
**characterized in that** the actuating device is a 2-box solution with two modules, wherein:
- the first module comprises a pressure supply device (DV1, DV2), a valve arrangement (HCU), an open-loop and closed-loop control unit (ECU) and a reservoir (VB), wherein the open-loop and closed-loop control unit (ECU) is of fully or partially redundant configuration; and
- the second module comprises either the master brake cylinder (HZ) with optional travel simulator (WS) or an electronic brake pedal (P - figure 5) with travel simulator WS (WS - figure 5) or only a brake switch for level 5.

2. Actuating device according to Claim 1, **characterized in that** the master brake cylinder (HZ) is a single master brake cylinder with only a single piston, wherein the piston delimits only one pressure chamber and the piston can be acted on with force by the actuating device.

3. Actuating device according to Claim 1 or 2, wherein the second module comprises the electronic brake pedal (P - figure 5) with travel simulator (WS - figure 5) and WS pedal travel sensors with sensor ECU and force-travel sensor (KWS).

4. Actuating device according to any of the preceding claims, **characterized**
- **in that** at least one electrical open-loop and closed-loop control unit (ECU) has two mutually separate on-board electrical system connections;
- **in that** the drive (M) of at least one pressure supply device (DV1, DV2) has a motor with redundant winding systems with in particular 2x3 phase connection;
- **in that** an additional redundant connection, in particular via an additional redundant circuit board; and/or
- **in that** an additional redundant driver for the coil of a solenoid valve (MV) is provided.

5. Actuating device according to any of the preceding claims, **characterized in that** a second pressure supply device (DV2), in particular with continuous delivery action, is provided, which is arranged either in the first housing (A) or in a further housing (A1), in particular together with a valve arrangement (HCU);
optionally wherein at least one pressure supply device (DV1, DV2) is provided per hydraulic circuit (BK1, BK2).

6. Actuating device according to any of the preceding claims, **characterized in that** the hydraulic pressure chamber or the hydraulic pressure chambers of the pressure supply device (DV1) as well as the valve arrangement (HCU) with solenoid valves, hydraulic lines, hydraulic pistons and hydraulic chambers are arranged in one housing (A) or a maximum of two directly adjacent hydraulically connected housings (A, A1), which together form a unit.

7. Actuating device according to any of the preceding claims, **characterized in that** the axis (a_{DV1}) of the first pressure supply (DV1) is arranged perpendicular to the axis (a1_{DV2}, a2_{DV2}) of the second pressure supply (DV2) and/or the axis (a2_{DV2}) of the second pressure supply (DV2) is arranged vertically.

8. Actuating device according to any of the preceding claims, **characterized in that** at least one pressure supply device (DV2) is a pump with continuous delivery action, in particular a gear pump or eccentric piston pump, which is driven by an electromotive drive (M), in particular is responsible for the ABS and/or ESP function in normal operation.

9. Actuating device according to any of the preceding claims, **characterized in that** the pressure supply device (DV2) assists the other pressure supply device (DV1) in the case of a rapid pressure build-up or a pressure build-up above 120 bar, and/or performs the pressure supply in the event of fading and/or for the ABS function, and/or, in the event of failure of the other pressure supply (DV1), jointly performs the function thereof.

10. Actuating device according to any of the preceding claims, **characterized in that** the pressure supply device (DV1) performs the pressure build-up for pressure ranges lower than or equal to 120 bar, and the ABS function.

11. Actuating device according to any of the preceding claims, **characterized in that**, in the event of failure of the pressure supply device (DV2), only a maximum pressure of 120 bar is available by means of the pressure supply (DV1).

12. Actuating device according to any of the preceding claims, **characterized in that** the pressure modulation in the wheel brakes (RB1, RB2, RB3, RB4) of a brake circuit (BK1, BK2) for the ABS function is performed by means of the pressure supply device (DV1, DV2) assigned to the brake circuit (BK1, BK2) in multiplex operation, and in particular volumes of a hydraulic fluid are adjusted, for the purposes of pressure setting, by means of a piston of the pressure supply device.

13. Actuating device according to any of the preceding claims, **characterized in that** at least one hydraulic main line (4, 5) is connectable via a discharge valve (AV1, AV2) to a reservoir (VB), and/or the connecting line (2) is connectable via a central discharge valve (ZAV) to a reservoir (VB), in particular for the purpose of pressure reduction in at least one component (RB1, RB2, RB3, RB4) and/or both hydraulic circuits (BK1, BK2).

14. Actuating device according to any of the preceding claims, **characterized in that** the electronic control unit (ECU) is arranged in a housing (18), wherein a sensor target (35) is connected to the rotor (64) or to a threaded part (56) which is rotatable about the axis (a_{DV1}), and a sensor element (34) is arranged in a sensor housing (52, 52a), wherein the sensor housing (52, 52a) either
- is connected by means of an elastic connection to the housing (18) of the electronic control unit (ECU),
and/or
- has an inner housing part (52a) and an outer housing part (52), wherein at least one housing part (52, 52a) is connected to the housing (18) of the control unit (ECU), wherein an elastic part (61), in particular in the form of an elastic seal or a seal bellows, or at least one spring, pushes regions of the at least one housing part (52, 52a) against a region of the housing (18).

15. Actuating device according to any of the preceding claims, **characterized in that** the housing (18) of the electronic control unit (ECU) has a front side (ECU-V), a top side (ECD-O), a side wall (ECU-S) and a rear side (ECU-H), wherein a reservoir (VB) for hydraulic medium is arranged on the electronic control unit (ECU) or so as to be spaced apart therefrom, wherein the reservoir (VB) has an opening (100), which is closable in particular by means of a lid (101), for the filling of hydraulic medium, which opening is arranged in particular in front of the front side (ECU-V) of the electronic control unit (ECU), wherein the reservoir (VB) engages around the electronic control unit (ECU) from at least two, in particular at least three, sides (ECU-V, ECU-S, ECU-H) or extends at least partially along these sides.

16. Actuating device according to any of the preceding claims, wherein the open-loop and closed-loop control unit (ECU) comprises a plug connector to the on-board electrical system which is arranged above the HCU, and wherein the plug connector shows above the at least one valve arrangement (HCU).

17. Actuating device according to any of the preceding claims, wherein the open-loop and closed-loop control unit (ECU) comprises two plug connectors to the on-board electrical system which are each arranged above the HCU, and wherein the plug connectors each show above the at least one valve arrangement (HCU).

## Revendications

1. Arrangement d'actionnement pour un système de freinage à action hydraulique, possédant les composants suivants :
- un maître-cylindre de frein (HZ) disposé dans un boîtier (C) et comprenant au moins un piston qui peut être sollicité en force par un arrangement d'actionnement, notamment sous la forme d'une pédale de frein,
- au moins un dispositif d'alimentation en pression (DV1, DV2), au moins un dispositif d'alimentation en pression (DV1) étant une unité piston-cylindre entraînée par un mécanisme d'entraînement électromotorisé (M) ou une pompe à piston à double course, le mécanisme d'entraînement (M) déplaçant le piston de la pompe à piston ou à piston à double course directement ou par l'intermédiaire d'un engrenage démultiplicateur, notamment un engrenage à circulation de billes,
- au moins un ensemble de vannes (HCU) comprenant des électrovannes,
- au moins une unité de commande et de régulation électronique (ECU),
le système de freinage possédant au moins deux circuits hydrauliques (BK1, BK2) et une modification de pression pouvant être effectuée dans au moins un frein de roue (RB1, RB2, RB3, RB4) associé à un circuit hydraulique (BK1, BK2) au moyen du dispositif d'alimentation en pression (DV1),
l'ensemble de vannes (HCU) et au moins un piston et une chambre de pression d'au moins un dispositif d'alimentation en pression (DV1, DV2) étant disposés dans un premier boîtier (A), et le boîtier (C) de l'arrangement d'actionnement étant relié au premier boîtier (A) ;
**caractérisé en ce que** l'arrangement d'actionnement est une solution à 2 boîtiers comprenant deux modules, le :
- premier module comportant un dispositif d'alimentation en pression (DV1, DV2), un arrangement de vannes (HCU), une unité de commande et de régulation (ECU) et un réservoir (VB), l'unité de commande et de régulation (ECU) étant configurée de manière entièrement ou partiellement redondante ; et
- le deuxième module comportant soit le maître-cylindre de frein (HZ) avec un simulateur de course (WS) optionnel, soit une pédale de frein électronique (P - Fig. 5) pourvue d'un simulateur de course WS (WS - Fig. 5), soit seulement un commutateur de frein pour le niveau 5.

2. Arrangement d'actionnement selon la revendication 1, **caractérisé en ce que** le maître-cylindre de frein (HZ) est un maître-cylindre de frein unique pourvu d'un seul piston, le piston ne délimitant qu'une seule chambre de pression et le piston pouvant être sollicité en force par l'arrangement d'actionnement.

3. Arrangement d'actionnement selon la revendication 1 ou 2, le deuxième module comportant la pédale de frein électronique (P - figure 5) pourvue d'un simulateur de course (WS - figure 5) et des capteurs de course de pédale WS avec une ECU de capteur et un capteur de force et de course (KWS).

4. Arrangement d'actionnement selon l'une des revendications précédentes, **caractérisé en ce**
- **qu'**au moins une unité de commande et de régulation électrique (ECU) possède deux raccordements au réseau de bord séparés l'un de l'autre ;
- **que** le mécanisme d'entraînement (M) d'au moins un arrangement d'alimentation en pression (DV1, DV2) possède un moteur comprenant des systèmes d'enroulement redondants avec notamment un circuit à 2x3 phases ;
- **qu'**un raccordement redondant supplémentaire, notamment par le biais d'une carte à circuit imprimé redondante supplémentaire ; et/ou
- **qu'**un circuit pilote redondant supplémentaire pour la bobine d'une électrovanne (MV) est présent.

5. Arrangement d'actionnement selon l'une des revendications précédentes, **caractérisé en ce qu'**un deuxième dispositif d'alimentation en pression (DV2), notamment à débit continu, est présent, lequel est disposé soit dans le premier boîtier (A), soit dans un boîtier supplémentaire (A1), notamment conjointement avec un ensemble de vannes (HCU) ;
en option, au moins un dispositif d'alimentation en pression (DV1, DV2) étant prévu par circuit hydraulique (BK1, BK2).

6. Arrangement d'actionnement selon l'une des revendications précédentes, **caractérisé en ce que** la chambre de pression hydraulique ou les chambres de pression hydrauliques du dispositif d'alimentation en pression (DV1) ainsi que l'ensemble de vannes (HCU) avec les électrovannes, les conduites hydrauliques, les pistons hydrauliques et les chambres hydrauliques sont disposés dans un boîtier (A) ou au maximum dans deux boîtiers (A, A1) directement voisins et reliés hydrauliquement, lesquels forment ensemble une unité.

7. Arrangement d'actionnement selon l'une des revendications précédentes, **caractérisé en ce que** l'axe (a_{DV1}) de la première alimentation en pression (DV1) est disposé perpendiculairement à l'axe (a1_{DV2}, a2_{DV2}) de la deuxième alimentation en pression (DV2) et/ou l'axe (a2_{DV2}) de la deuxième alimentation en pression (DV2) est disposé verticalement.

8. Arrangement d'actionnement selon l'une des revendications précédentes, **caractérisé en ce qu'**au moins un dispositif d'alimentation en pression (DV2) est une pompe à débit continu, notamment une pompe à engrenages ou une pompe à piston excentrique, laquelle est entraînée par un mécanisme d'entraînement électromotorisé (M), notamment responsable de la fonction ABS et/ou ESP en fonctionnement normal.

9. Arrangement d'actionnement selon l'une des revendications précédentes, **caractérisé en ce que** le dispositif d'alimentation en pression (DV2) assiste l'autre dispositif d'alimentation en pression (DV1) en cas de montée en pression rapide ou de montée en pression au-dessus de 120 bars et/ou réalise l'alimentation en pression en cas d'évanouissement et/ou pour la fonction ABS et/ou prend également en charge la fonction de l'autre dispositif d'alimentation en pression (DV1) en cas de défaillance de celui-ci.

10. Arrangement d'actionnement selon l'une des revendications précédentes, **caractérisé en ce que** le dispositif d'alimentation en pression (DV1) prend en charge la montée en pression pour des plages de pression inférieures ou égales à 120 bars et la fonction ABS.

11. Arrangement d'actionnement selon l'une des revendications précédentes, **caractérisé en ce qu'**en cas de défaillance du dispositif d'alimentation en pression (DV2), seule une pression maximale de 120 bars est disponible par le biais de l'alimentation en pression (DV1).

12. Arrangement d'actionnement selon l'une des revendications précédentes, **caractérisé en ce que** la modulation de pression dans les freins de roue (RB1, RB2, RB3, RB4) d'un circuit de freinage (BK1, BK2) pour la fonction ABS est effectuée au moyen du dispositif d'alimentation en pression (DV1, DV2) associé au circuit de freinage (BK1, BK2) en mode multiplex, notamment en ajustant les volumes d'un liquide hydraulique en vue du réglage de la pression au moyen d'un piston du dispositif d'alimentation en pression.

13. Arrangement d'actionnement selon l'une des revendications précédentes, **caractérisé en ce qu'**au moins une conduite hydraulique principale (4, 5) peut être reliée à un réservoir (VB) par le biais d'une vanne d'évacuation (AV1, AV2) et/ou la conduite de liaison (2) à un réservoir (VB) par le biais d'une vanne d'évacuation centrale (ZAV), notamment en vue de réduire la pression dans au moins un composant (RB1, RB2, RB3, RB4) et/ou les deux circuits hydrauliques (BK1, BK2).

14. Arrangement d'actionnement selon l'une des revendications précédentes, **caractérisé en ce que** l'unité de commande électronique (ECU) est disposée dans un boîtier (18), une cible de capteur (35) étant reliée au rotor (64) ou à une partie filetée (56) pouvant tourner autour de l'axe (a_{DV1}), et un élément capteur (34) étant disposé dans un boîtier de capteur (52, 52a), le boîtier de capteur (52, 52a)
- étant soit relié au boîtier (18) de l'unité de commande électronique (ECU) au moyen d'une liaison élastique
et/ou
- possédant une partie de boîtier intérieure (52a) et une partie de boîtier extérieure (52), au moins une partie de boîtier (52, 52a) étant reliée au boîtier (18) de l'unité de commande (ECU), une pièce élastique (61), notamment sous la forme d'un joint élastique ou d'un soufflet d'étanchéité, ou au moins un ressort pressant des zones de l'au moins une partie de boîtier (52, 52a) contre une zone du boîtier (18).

15. Arrangement d'actionnement selon l'une des revendications précédentes, **caractérisé en ce que** le boîtier (18) de l'unité de commande électronique (ECU) possède une face avant (ECU-V), une face supérieure (ECU-O), une paroi latérale (ECU-S) et une face arrière (ECU-H), un réservoir (VB) de fluide hydraulique étant disposé au niveau de l'unité de commande électronique (ECU) ou espacé de celle-ci, le réservoir (VB) possédant une ouverture (100) qui peut être fermée, notamment au moyen d'un couvercle (101), servant au remplissage avec du fluide hydraulique, laquelle est notamment disposée devant la face avant (ECU-V) de l'unité de commande électronique (ECU), le réservoir (VB) entourant l'unité de commande électronique (ECU) par au moins deux, notamment au moins trois côtés (ECU-V, ECU-S, ECU-H), ou s'étendant au moins partiellement le long de ces côtés.

16. Arrangement d'actionnement selon l'une des revendications précédentes, l'unité de commande et de régulation (ECU) comportant une fiche vers le réseau de bord, qui est disposée au-dessus du HCU, et la fiche pointant au-dessus de l'au moins un ensemble de vannes (HCU).

17. Arrangement d'actionnement selon l'une des revendications précédentes, l'unité de commande et de régulation (ECU) comportant deux fiches vers le réseau de bord, lesquelles sont respectivement disposées au-dessus du HCU, et les fiches pointant respectivement au-dessus de l'au moins un ensemble de vannes (HCU).
